# EUROPEAN PATENT APPLICATION

(11) **EP 2 221 021 A1**
(43) Date of publication of application: **25.08.2010**
(21) Application number: 10001431.5
(22) Date of filing: 11.02.2010
(51) Int. Cl.: A61C 8/00

(54) **Dental implant fixture**

(30) Priority: 20.02.2009 JP 2009038166
(71) Applicant: GC Corporation, Itabashi-ku Tokyo 174-8585 (JP)
(72) Inventor: Ikeya, Ryosuke, Tokyo 174-8585 (JP); Noguchi, Tsuyoshi, Tokyo 174-8585 (JP); Sakaguchi, Yoshihiro, Tokyo 174-8585 (JP); Takagi, Takamitsu, Tokyo 174-8585 (JP)
(74) Representative: Müller-Boré & Partner Patentanwälte

(57) **Abstract**

To provide a dental implant capable of preventing breaking of a bone bonding which is induced by intruding of bacteria into a depth portion of the dental implant to cause bacterial infection, the dental implant includes an embedding male screw portion (1a) formed on a tapering truncated conical main body having a diameter decreasing toward an end at the side opposite to the oral cavity side, and a collar portion (1c) is provided at the oral cavity side of the embedding male screw portion (1a), the dental implant further includes a sealing male screw portion (1b) having one or more threads which is formed in a multiple-thread shape with the embedding male screw portion (1a), the sealing male screw portion (1b) extends between the collar portion (1c) and the embedding male screw portion (1a) toward the end at the side opposite to the oral cavity side, and has a length of 1/5 to 1/3 of a length (L) of the embedding male screw portion (1a), the sealing male screw portion (1b) is on a truncated conical face having a taper smaller than a taper of the truncated conical main body, and the threads of the sealing male screw portion (1b) gradually decrease in height and disappear at the side opposite to the oral cavity side.

## Description

The present invention relates to a dental implant fixture used in a dental implant treatment for producing a dental prosthesis at a lost tooth part and recovering a lost oral cavity function. In the dental implant treatment, the dental implant fixture is embedded in an embedding hole formed in a jawbone of the lost tooth part.

IN the recent years, one of popular dental prosthesis treatments is a dental implant treatment, in which a dental implant fixture made of titanium or a titanium alloy having excellent biocompatibility is embedded into a jawbone at a lost tooth part, so as to directly bond with the bone (to make an osseointegration), and is used as a substitute of a natural dental root.
In the dental implant treatment, a crown is used for a single tooth, and a bridge or an overdenture is used for plural teeth. It has been confirmed that the crown, the bridge, or the overdenture can exercise their functions for a long period of time, as a substitute for lost teeth.

Japanese Patent Application Laid-Open No. 2001-321392 discloses a dental implant fixture used in the dental implant treatment. In this technique, a male screw portion is formed on an outer periphery of the dental implant fixture, and a proper bonding state with a bone is thus secured when the dental implant fixture is embedded into a jawbone. This screw portion follows a collar portion provided on the oral cavity inner side. In addition, a surface of the collar portion except 1 to 4mm from an end surface on the oral cavity inner side to the side opposite to the oral cavity inner side and a surface of the male screw portion, which are to be embedded into an embedding hole formed in a jawbone of a lost tooth part, are subjected to a surface roughening treatment. Thus, the technique can improve the bone bonding strength of the dental implant fixture. Further, since the part not roughened, which is within 1 to 4mm from the end surface on the oral cavity inner side to the side opposite to the oral cavity inner side, is provided on the surface of the collar potion, even if bacteria intrude, a time for making a living space of the bacteria can be delayed.

However, when bacteria intrude, although it is possible to delay a time for making the living space of bacteria by only providing the part not roughened within only 1 to 4mm from the end surface on the oral cavity inner side to the side opposite to the oral cavity inner side on the collar portion, it is yet difficult to completely prevent occurring of bacterial infection which is induced by the bacteria intruded from a space between the collar portion and a gingival edge into a depth portion of the dental implant fixture. As a result, there is danger that the bone bonding could be broken, and the dental implant fixture should be thus removed.

The present invention is directed to a dental implant fixture capable of preventing breaking of a bone bonding which is induced by bacteria, which are always present in an oral cavity, intruded into a depth portion of the dental implant fixture to cause bacterial infection.

Present inventors carried out earnest works to solve the aforementioned problems, and as a result, they focused on the fact that bacteria intrude from a gap between a collar potion and a gingival edge into a depth portion of a dental implant fixture, cause bacterial infection, and thus break a bone bonding. Therefore, they tried to make the following configuration to complete the present invention. A dental implant fixture includes a female screw portion, an embedding male screw portion, and a collar portion. The female screw portion is formed along a center axis from the oral cavity inner side. The embedding male screw portion is formed so as to have an equal outer diameter on a tapering truncated conical main body which has a side periphery having a diameter decreasing toward an end at the side opposite to the oral cavity inner side. The collar potion is provided at the oral cavity inner side of the embedding male screw portion. The dental implant fixture further includes a sealing male screw portion having one or more threads which is formed in a multiple-thread shape with the embedding male screw portion. The sealing male screw portion extends from a boundary portion between the collar potion and the embedding male screw portion toward the end at the side opposite to the oral cavity inner side, and has a length of 1/5 to 1/3 of a length of the embedding male screw portion. The sealing male screw portion has an outer diameter which starts from an outer diameter equal to the outer diameter of the embedding male screw portion at the boundary portion and is on a truncated conical face having a taper smaller than a taper of the truncated conical main body. In addition, the threads of the sealing male screw portion gradually decrease in height and disappear at the side opposite to the oral cavity inner side. When the dental implant fixture has the aforementioned configuration, bacteria intruding from the gap between the collar potion and the gingival edge can be suppressed at not only the embedding male screw portion but also the sealing male screw portion. Therefore, the bacteria do not intrude into the depth portion of the dental implant fixture to cause bacterial infection. Thus, a situation that the dental implant fixture must be removed because of breaking of a bone bonding can be prevented.

According to an aspect of the present invention, a dental implant fixture includes a female screw portion formed along a center axis from the oral cavity inner side, an embedding male screw portion formed so as to have an equal outer diameter on a tapering truncated conical main body which has a side periphery having a diameter decreasing toward an end at the side opposite to the oral cavity inner side, and a collar potion provided at the oral cavity inner side of the embedding male screw portion, wherein the dental implant fixture further includes a sealing male screw portion having one or more threads which is formed in a multiple-thread shape with the embedding male screw portion, the sealing male screw portion extends from a boundary portion between the collar potion and the embedding male screw portion toward the end at the side opposite to the oral cavity inner side, and has the length of 1/5 to 1/3 of the length of the embedding male screw portion, the sealing male screw portion has an outer diameter which starts from an outer diameter equal to the outer diameter of the embedding male screw portion at the boundary portion, and is on a truncated conical face having a taper smaller than a taper of the truncated conical main body, and the threads of the sealing male screw portion gradually decrease in height and disappear at the side opposite to the oral cavity inner side.

Further, if the surfaces of the embedding male screw portion and the sealing screw portions and the side surface of the collar potion are subjected to a surface roughening treatment, the dental implant fixture can have an increased surface area in contact with a bone, so it is preferable. If the dental implant fixture has a cutting blade having a self-tapping function from a lower end of the embedding screw portion toward the oral cavity inner side, the cutting blade can form a female screw in a jawbone simultaneously when embedding the dental implant fixture. Thus, thread the dental implant fixture can be embedded accurately, and an embedding operation can be simplified, so it is preferable. If the embedding male screw portion has a square thread shape, stability of the dental implant fixture after being embedded is improved, so it is preferable.

Furthermore, if the dental implant fixture has a truncated conical concave portion, which expands in diameter toward the oral cavity inner side at the oral cavity inner side of the female screw portion, the dental implant fixture can accurately and strongly fit to an abutment fixed on the oral cavity inner side of the dental implant fixture, so it is preferable. If the dental implant fixture has an anti-rotation portion, which is formed between the concave portion and the female screw portion, at the oral cavity inner side, the abutment fixed on the oral cavity inner side of the dental implant fixture can be accurately positioned and fixed in a not-rotating state, so it is preferable.

A dental implant fixture according to the present invention includes a female screw portion formed along a center axis from the oral cavity inner side, an embedding male screw portion formed so as to have an equal outer diameter on a tapering truncated conical main body which has a side periphery having a diameter decreasing toward an end at the side opposite to the oral cavity inner side, and a collar potion provided at the oral cavity inner side of the embedding male screw portion, wherein the dental implant fixture further includes a sealing male screw portion having one or more threads which is formed in a multiple-thread shape with the embedding male screw portion, the sealing male screw portion extends from a boundary portion between the collar potion and the embedding male screw portion toward the end at the side opposite to the oral cavity inner side, and has a length of 1/5 to 1/3 of a length of the embedding male screw portion, the sealing male screw portion has an outer diameter which starts from an outer diameter equal to the outer diameter of the embedding male screw portion at the boundary portion, and is on a truncated conical face having a taper smaller than a taper of the truncated conical main body, and the threads of the sealing male screw portion decrease in height gradually and disappear at the side opposite to the oral cavity inner side. When the dental implant fixture has the aforementioned configuration, the bacteria intruding from the gap between the collar portion and the gingival edge can be suppressed at the embedding male screw portion and the sealing male screw portion. Therefore, the bacteria do not intrude into the depth portion of the dental implant fixture to cause bacterial infection. Thus, a situation that the dental implant fixture must be removed because of breaking of a bone bonding can be prevented.

Further, in the dental implant fixture, if the surfaces of the embedding male screw portion and the sealing screw portion and the side surface of the collar potion are subjected to a surface roughening treatment, the dental implant fixture can have an increased surface area in contact with a bone and bone bonding can be strengthened, so it is preferable. If the dental implant fixture has a cutting blade having a self-tapping function from a lower end of the embedding screw portion toward the oral cavity inner side, the cutting blade can form a female screw in a jawbone simultaneously when embedding the dental implant fixture. Thus, the dental implant fixture can be embedded accurately, and an embedding operation can be simplified, so it is preferable. If the embedding male screw portion has a square thread shape, stability of the dental implant fixture after being embedded is improved, so it is preferable.

Furthermore, if the dental implant fixture has a truncated conical concave portion which expands in diameter toward the oral cavity inner side at the oral cavity inner side of the female screw portion, the dental implant fixture can accurately and strongly fit to an abutment fixed on the oral cavity inner side of the dental implant fixture, so it is preferable. If the dental implant fixture has an anti-rotation portion, which is formed between the concave portion and the female screw portion, at the oral cavity inner side, the abutment fixed on the oral cavity inner side of the dental implant fixture can be accurately positioned and fixed in a not-rotating state, so it is preferable.

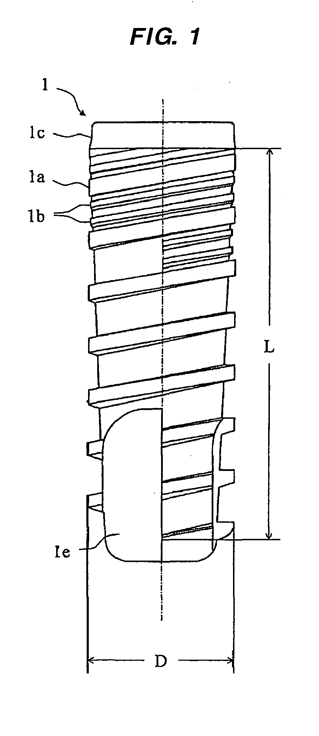

Fig. 1 is a front view to illustrate an exemplary embodiment of a dental implant fixture according to the present invention.

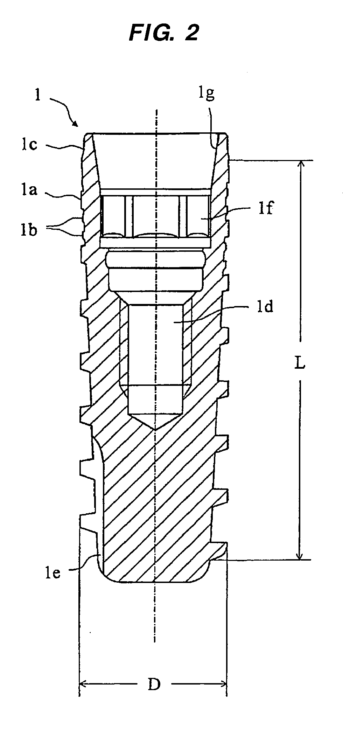

Fig. 2 is a longitudinal sectional view to illustrate the dental implant fixture according to the present invention illustrated in Fig. 1.

In the drawings, a dental implant fixture 1 according to the present invention is made of titanium or a titanium alloy in order to give biocompatibility and strength, and make a bone bonding preferable, like a conventional dental implant fixture.

The dental implant fixture 1 includes a female screw portion 1d, an embedding male screw portion 1a, and a collar potion 1c. The female screw portion 1d is formed along a center axis from the oral cavity inner side to attach a screw (not illustrated) which is connected and fixed with an abutment (not illustrated). The embedding male screw portion 1a is formed on a side periphery thereof in order to easily embed the dental implant fixture into an embedding hole formed in a jawbone of a lost tooth part. The embedding male screw portion 1a is formed so as to have an equal outer diameter D on a tapering truncated conical main body having a diameter decreasing toward an end at the side opposite to the oral cavity inner side. The collar potion 1c is provided at the oral cavity inner side of the embedding male screw portion 1a, and is in contact with a gingival edge.

Further, the dental implant fixture 1 includes a sealing male screw portions 1b having one or more threads which is formed in a multiple-thread shape with the embedding male screw portion 1a. The sealing male screw portion 1b extends from a boundary portion between the collar potion 1c and the embedding male screw portion 1a toward the end at the side opposite to the oral cavity inner side and has a length of 1/5 to 1/3 of a length L of the embedding male screw portion 1a. The sealing male screw portion 1b has an outer diameter which starts from an outer diameter equal to the outer diameter D of the embedding male screw portion 1a at the boundary portion, and is on a truncated conical face having a taper smaller than the taper of the truncated conical main body of the dental implant fixture 1. In addition, the threads of the sealing male screw portion 1b decrease in height gradually and disappear at the side opposite to the oral cavity inner side. According to the aforementioned constitution, the sealing male screw portion 1b having one or more threads, which is provided at a screw groove portion of the embedding male screw portion 1a comes entirely into contact with a bone when the dental implant fixture 1 is embedded in the embedding hole formed in a jawbone at a lost tooth part. Thus, a gap is not formed between the bone and the dental implant fixture 1 at the part where the sealing male screw portion 1b comes entirely into contact with the bone. In addition, a passage reaching a depth portion of the dental implant fixture 1 from the oral cavity inner side becomes to be very long. As a result, it can be suppressed that bacteria intrude into the depth portion of the dental implant fixture 1. That is, in the conventional dental implant fixture 1, only a male screw portion provided on a side periphery suppresses the intruding of bacteria into the depth portion. By contrast, in the dental implant fixture 1 according to the present invention, the embedding male screw portion 1a and the sealing male screw portion 1b prevent the intruding of bacteria into the depth portion, where the sealing male screw portion 1b comes entirely into contact with the bone when embedding the dental implant fixture 1 into the embedding hole formed in the jawbone at the lost tooth part. Thus, the situation that the dental implant fixture 1 must be removed because of intruding of bacteria into the depth portion of the dental implant fixture 1, causing of bacterial infection, and breaking of a bone can be prevented. Further, since the sealing male screw portion 1b has the threads gradually decreasing in height and disappearing at the side opposite to the oral cavity inner side, large resistance does not occur during an operation for embedding the dental implant fixture 1. Furthermore, if the length of the sealing male screw portion 1b is less than 1/5 of the length L of the embedding male screw portion 1a, the intruding of bacteria into the depth portion of the dental implant fixture 1 cannot be prevented sufficiently. If the length of the sealing male screw portion 1b is more than 1/3 of the length L of the embedding male screw portion 1a, large resistance could occur during the operation for embedding the dental implant fixture 1. Therefore, the length of the sealing male screw portion 1b needs to be within the range of 1/5 to 1/3 of the length L of the embedding male screw portion 1a.

Further, as for the dental implant fixture 1 according to the present invention, if the surfaces of the embedding male screw portion 1a and the sealing screw portion 1b, and the side surface of the collar potion 1c are subjected to a surface roughening treatment, the dental implant fixture 1 can have an increased surface area in contact with a bone and bone bonding can be strengthened, so it is preferable. If the dental implant fixture 1 has a cutting blade 1e on an end at the side opposite to the oral cavity inner side to make the fixture to be a self-tapping type, the cutting blade 1e can form a female screw in a jawbone simultaneously when embedding the dental implant fixture 1. Thus, the dental implant fixture 1 can be embedded accurately, and an embedding operation can be simplified since there is no necessity to form the screw by a tapping tool, so it is preferable. If the embedding male screw portion 1a has a square thread shape, stability of the dental implant fixture 1 after being embedded is improved, so it is preferable.

Furthermore, if the dental implant fixture 1 has a truncated conical concave portion 1g, which expand in diameter toward the oral cavity inner side at the oral cavity inner side of the female screw portion 1d, the dental implant fixture 1 can accurately and strongly fit to an abutment fixed on the oral cavity inner side of the dental implant fixture 1, so it is preferable. If the dental implant fixture 1 has an anti-rotation portion 1f formed between the concave portion 1g and the female screw portion 1d at the oral cavity inner side, the abutment fixed on the oral cavity inner side of the dental implant fixture 1 can be accurately positioned and fixed in a not-rotating state, and a dental prosthesis having high accuracy can be thus produced, so it is preferable.

## Claims

1. A dental implant fixture comprising:
a female screw portion formed along a center axis from the oral cavity inner side;
an embedding male screw portion formed so as to have an equal outer diameter on a tapering truncated conical main body which has a side periphery having a diameter decreasing toward an end at the side opposite to the oral cavity inner side; and a collar potion provided at the oral cavity inner side of the embedding male screw portion, wherein the dental implant fixture further comprises a sealing male screw portion having one or more threads, which is formed in a multiple-thread shape with the embedding male screw portion ,
the sealing male screw portion extends from a boundary portion between the collar potion and the embedding male screw portion toward the end at the side opposite to the oral cavity inner side, and has a length of 1/5 to 1/3 of a length of the embedding male screw portion, the sealing male portion has an outer diameter which starts from an outer diameter equal to the outer diameter of the embedding male screw portion at the boundary portion, and is on a truncated conical face having a taper smaller than a taper of the truncated conical main body, and
the threads of the sealing male screw portion gradually decrease in height and disappear at the side opposite to the oral cavity inner side.

2. The dental implant fixture as claimed in claim 1, wherein the surfaces of the embedding male screw portion and the sealing male screw portion and the side surface of the collar portion are subjected to a surface roughening treatment.

3. The dental implant fixture as claimed in claim 1 or 2, wherein the fixture further comprises a cutting blade having a self-tapping function toward the oral cavity inner side from a lower end of the embedding male screw portion.

4. The dental implant fixture as claimed in any one of claims 1 to 3, wherein the embedding male screw portion has a square thread shape.

5. The dental implant fixture as claimed in any one of claims 1 to 4, wherein the fixture further comprises a truncated conical concave portion, which expands in diameter toward the oral cavity inner side, at the oral cavity inner side of the female screw portion.

6. The dental implant fixture as claimed in claim 5, wherein the fixture further comprises an anti-rotation portion, which is formed between the concave portion and the female screw portion, at the oral cavity inner side of the female screw portion.
